Europäisches Patentamt

European Patent Office

Office européen des brevets

(19)

(11) **EP 0 563 373 B1**

(12) **FASCICULE DE BREVET EUROPEEN**

(45) Date de publication et mention
de la délivrance du brevet:
**21.08.1996 Bulletin 1996/34**

(51) Int Cl.6: **H04B 3/56**

(86) Numéro de dépôt international:
**PCT/FR92/00976**

(21) Numéro de dépôt: **92923840.0**

(22) Date de dépôt: **15.10.1992**

(87) Numéro de publication internationale:
**WO 93/08653 (29.04.1993 Gazette 1993/11)**

(54) **CIRCUIT SEPARATEUR-COUPLEUR DIRECTIF POUR COURANTS PORTEURS A FREQUENCE MOYENNE SUR LIGNE ELECTRIQUE A BASSE TENSION**

Richtkoppler/verzweigerschaltung für Mittelfrequenz Trägerstrom auf Niederspannungsleitung

DIRECTIVE SEPARATOR/COUPLER CIRCUIT FOR MEDIUM FREQUENCY CARRIER CURRENTS ON A LOW VOLTAGE ELECTRIC LINE

(84) Etats contractants désignés:
**AT BE CH DE DK ES FR GB GR IE IT LI LU MC NL SE**

(30) Priorité: **17.10.1991 FR 9112821**

(43) Date de publication de la demande:
**06.10.1993 Bulletin 1993/40**

(73) Titulaire: **ELECTRICITE DE FRANCE**
**F-75008 Paris (FR)**

(72) Inventeur: **CHAFFANJON, Daniel**
**F-91230 Montgeron (FR)**

(74) Mandataire: **Fréchède, Michel et al**
**Cabinet Plasseraud**
**84, rue d'Amsterdam**
**F-75440 Paris Cédex 09 (FR)**

(56) Documents cités:
EP-A- 0 141 673          FR-A- 2 306 572
US-A- 4 903 006

**Description**

L'invention concerne un circuit séparateur-coupleur directif pour courants porteurs à fréquence moyenne sur ligne électrique du réseau alternatif basse-tension.

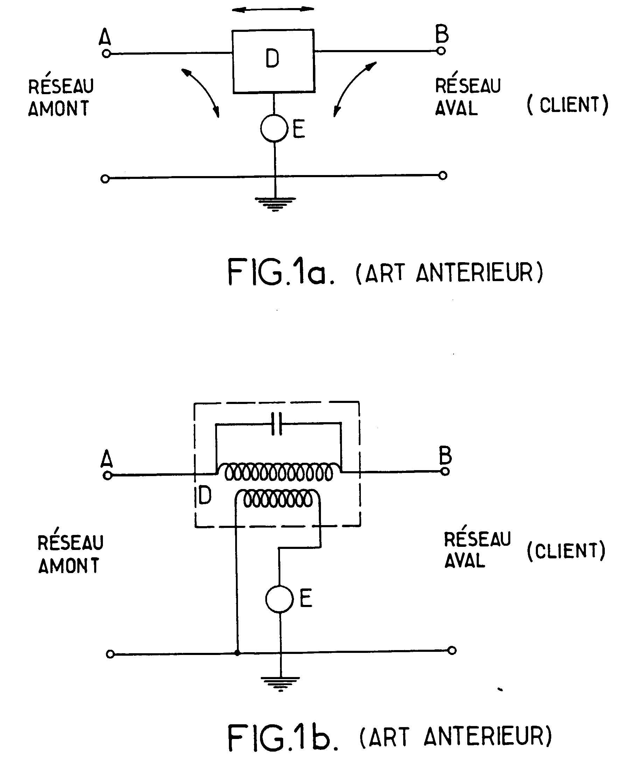

La transmission d'information sur les réseaux de distribution et d'alimentation en énergie électrique basse tension est actuellement effectuée au moyen de circuits émetteurs-récepteurs à courants porteurs E, lesquels sont couplés au réseau, ainsi que représentés en figure 1a, par l'intermédiaire d'un circuit séparateur-coupleur D, de façon à assurer un couplage maximum au réseau basse tension et une perturbation minimale tant du réseau lui-même, dit réseau amont, que du réseau aval, consistant le plus souvent en l'installation d'alimentation d'un client abonné. Ce type de circuit séparateur coupleur doit, d'une part, assurer l'adaptation du circuit émetteur-récepteur E, et, d'autre part, le découplage entre le réseau amont et le réseau aval. Dans ce but, on a jusqu'ici utilisé comme circuit séparateur-coupleur, ainsi que représenté en figure 1b, un couplage en tension, au moyen d'un transformateur émetteur de couplage ; les circuits à basse tension et à courants porteurs étant ainsi complètement séparés galvaniquement. De tels circuits donnent satisfaction quant au découplage en courant continu ou homopolaire, mais ils ne permettent cependant pas de réaliser un véritable circuit coupleur directif.

La présente invention a pour objet la mise en oeuvre d'un circuit séparateur-coupleur directif permettant d'assurer un découplage maximum entre l'émetteur-récepteur E et le réseau aval B alors que le couplage entre le même émetteur-récepteur E et le réseau amont A est optimum.

Un autre objet de la présente invention est la mise en oeuvre d'un circuit séparateur-coupleur directif dans lequel le sens de la directivité précitée peut être inversé, découplage maximum entre émetteur-récepteur E et réseau amont A et couplage optimum entre émetteur-récepteur E et réseau aval B.

Un autre objet de la présente invention est également la mise en oeuvre d'un circuit séparateur-coupleur permettant d'assurer un filtrage efficace des signaux parasites, provenant du réseau aval B, et susceptibles de se propager vers le réseau amont A et l'émetteur-récepteur E ou réciproquement.

Le circuit séparateur-coupleur directif pour courants porteurs à fréquence moyenne sur une ligne électrique du réseau alternatif basse tension, objet de la présente invention, comprend un circuit résonnant parallèle inséré sur la ligne électrique, dont la fréquence de résonance est voisine de la fréquence centrale de la bande passante des courants porteurs à fréquence moyenne et un circuit d'émission-réception desdits courants porteurs couplés en tension audit circuit résonnant par un circuit de raccordement. Il est remarquable en ce que le circuit de raccordement comprend également une branche de raccordement série permettant d'assurer un couplage en courant du circuit d'émission-réception et de la ligne à la fréquence moyenne et un découplage du circuit d'émission-réception de la ligne à la fréquence du réseau basse tension.

Le circuit séparateur-coupleur directif objet de l'invention trouve application à la réalisation de systèmes de transmission d'informations par courants porteurs à fréquence moyenne sur les réseaux d'alimentation en énergie électrique basse tension.

Une description plus détaillée d'un circuit séparateur-coupleur directif, objet de la présente invention, sera maintenant donnée ci-après en liaison avec les dessins dans lesquels outre les figures 1a et 1b, relatives à des circuits séparateurs-coupleurs de l'art antérieur,

- la figure 2 représente un circuit séparateur-coupleur directif conforme à l'objet de la présente invention,
- la figure 3 représente une première variante de réalisation du circuit séparateur-coupleur directif selon l'invention tel que représenté en figure 2,
- la figure 4 représente un diagramme de couplage d'un enroulement supplémentaire mis en oeuvre dans le mode de réalisation de la figure 3 en fonction de la fréquence,
- les figures 5a et 5b représentent une deuxième variante de réalisation du circuit séparateur-coupleur directif selon l'invention dans laquelle un accroissement de la bande pas-sante aux fréquences moyennes est obtenu.

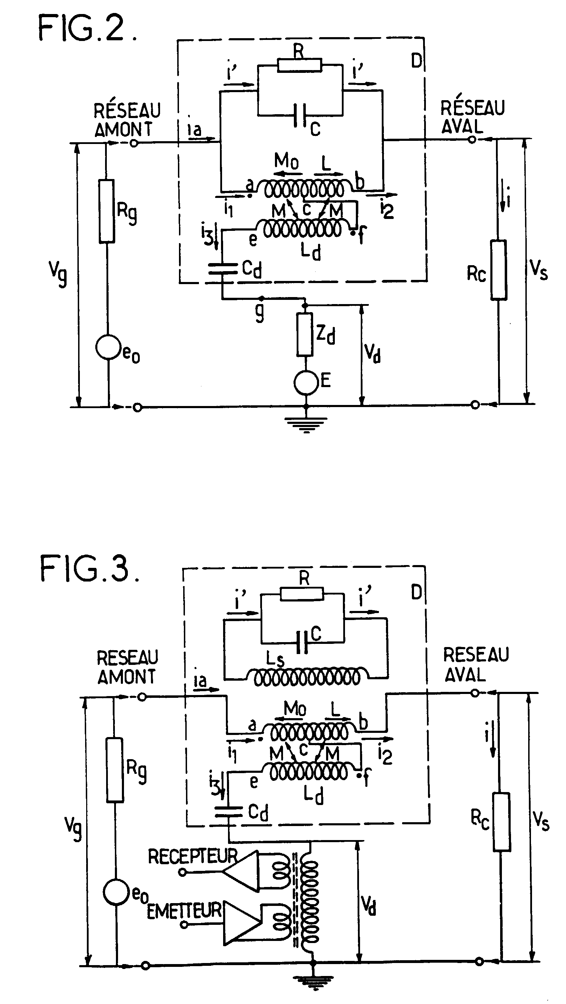

Une description plus détaillée d'un circuit séparateur-coupleur directif conforme à l'objet de la présente invention sera maintenant donnée en liaison avec la figure 2.

Ainsi que représenté sur la figure 2 précitée, le circuit séparateur-coupleur directif, objet de la présente invention, est destiné à assurer la transmission de courants porteurs à fréquence moyenne sur une ligne électrique du réseau alternatif basse tension.

Il comprend un circuit résonnant parallèle formé par une inductance L, une capacité C et une résistance R ce circuit résonnant étant inséré sur la ligne électrique précitée. La fréquence de résonance du circuit résonnant parallèle est voisine de la fréquence centrale de la bande passante des courants porteurs à fréquence moyenne. En fonctionnement, un circuit d'émission-réception E des courants porteurs est couplé en tension au circuit résonnant par un circuit de raccordement. Conformément à un aspect particulièrement avantageux de la présente invention, le circuit de raccordement comprend également une branche de raccordement série, formée par une inductance Ld et une capacité Cd connectées en série, la branche de raccordement en série étant connectée directement à un enroulement de l'inductance L et le couplage en tension étant réalisé par couplage mutuel de l'inductance L et de l'inductance $L_d$. Le circuit d'émission-réception E est alors connecté par un couplage en courant entre la capacité $C_d$ et la tension de référence ou de masse du dispositif et du réseau. La branche de raccordement en série permet d'assurer un couplage en courant du circuit d'émission-réception E et de la ligne à fréquence moyenne et un découplage du circuit d'émission-réception E de la ligne, à la fréquence du réseau basse tension, ainsi qu'il sera expliqué ci-après dans la présente description.

Selon un aspect particulièrement avantageux du circuit séparateur coupleur objet de la présente invention, le circuit de raccordement est formé par l'inductance auxiliaire $L_d$ couplée par inductance mutuelle avec l'inductance L du circuit résonnant parallèle, cette inductance auxiliaire $L_d$ assurant ainsi le couplage en tension du circuit émetteur E au circuit résonnant précité. En outre, une capacité auxiliaire $C_d$ assure la liaison entre une première extrémité de l'inductance auxiliaire $L_d$ et le circuit d'émission-réception E. Enfin un circuit de liaison électrique continu est prévu entre l'autre extrémité de l'inductance auxiliaire $L_d$ et le point milieu de l'inductance L du circuit résonnant parallèle.

Ainsi, le circuit de liaison électrique continu, l'inductance auxiliaire $L_d$ et la capacité auxiliaire $C_d$ constituent la branche de raccordement en série du circuit d'émission-réception du réseau de distribution d'énergie en basse tension.

Le fonctionnement du circuit séparteur-coupleur directif objet de la présente invention peut être résumé de la façon ci-après :

## A L'EMISSION :

L'émetteur est représenté par une force électromotrice E et son impédance interne notée $Z_d$. La tension disponible au point g, c'est-à-dire au point d'entrée du séparateur-coupleur objet de la présente invention, est appliquée au réseau électrique au point c point milieu de l'inductance principale L formant le circuit résonnant parallèle intercalé dans le réseau de distribution basse tension. La tension disponible au point g est appliquée au point milieu c précité par l'intermédiaire du condensateur $C_d$ et de l'inductance auxiliaire $L_d$.

Le condensateur $C_d$ est choisi de façon à isoler partiellement l'émetteur-récepteur E des effets dus à la présence de la tension à 50 Hz délivrée par le réseau d'alimentation, le courant dû à la composante à 50 Hz dans la branche de raccordement et en particulier dans l'impédance interne du générateur E pouvant alors être rendu inférieur à 150 mA.

5 L'inductance auxiliaire $L_d$ induit dans l'inductance principale L, connectée entre les points a et b représentés en figure 2, une tension à fréquence moyenne $V_a$ - $v_c$ proportionnelle au courant à moyenne fréquence noté $i_3$ sur la figure 2.

Les extrémités de l'inductance auxiliaire $L_d$ étant notées respectivement f et e, l'extrémité f étant connectée par la connexion continue au point milieu c de l'inductance principale L, une composition vectorielle, d'une part, de la tension $V_a$ - $V_c$ et de la tension $V_f$ - $V_e$, et, d'autre 5 part, de la tension $V_b$ - $V_c$ avec la tension $V_f$ - $V_e$ permet, pour des valeurs convenables en grandeur et en signe des coefficients d'induction et d'induction mutuelle M et notamment du couplage mutuel $M_0$ en les deux demi-inductances $L_{ac}$ et $L_{cb}$ de l'inductance principale L, du couplage mutuel M entre d'une part la demi-inductance principale $L_{ac}$ et l'inductance auxiliaire $L_d$ et d'autre part la demi-inductance principale $L_{cb}$ et l'inductance auxiliaire $L_d$, d'annuler la tension résultante à fréquence moyenne au point b c'est-à-dire à l'entrée du réseau aval, alors que cette tension résultante atteint un maximum au point a c'est-à-dire à l'entrée du réseau amont.

On notera que le circuit séparateur-coupleur objet de la présente invention permet de combiner le couplage en tension et le couplage en courant pour assurer le caractère de directivité précédemment mentionné.

On rappellera que le couplage en tension prévaut lorsque l'impédance du réseau est relativement élevée, supérieure à 10 ohms, alors que le couplage en courant est préféré en présence de faibles valeurs de cette impédance, soit inférieure à 5 ohms.

On notera également que, même pendant un temps très court, le réseau basse tension fluctue parfois très fortement en matière de valeur d'impédance, de quelques dixièmes à quelques dizaines d'ohms, et on comprend donc que le couplage mixte offre une adaptation particulièrement propice à l'usage envisagé. En outre, le circuit séparateur-coupleur objet de la présente invention permet de conférer à la transmission des courants porteurs un caractère directif dans une large bande de fréquences. En effet, d'une part, il est possible de renforcer jusqu'à + 3dB la puissance émise en direction du réseau amont, et, d'autre part, il est possible d'éliminer, sensiblement avec une atténuation de -20dB, les signaux indésirables provenant du réseau aval. Bien entendu on notera que sur changement du sens d'enroulement relatif de l'inductance principale L et de l'inductance auxiliaire $L_d$ la directivité de la transmission peut être modifiée vers le réseau aval respectivement le réseau amont.

En définitive le circuit séparateur-coupleur directif objet de la présente invention permet d'obtenir une performance notablement accrue, notamment en ce qui concerne le rapport signal/bruit local, lequel est supérieur à 20 dB.

**A LA RECEPTION :**

Le réseau amont basse tension se comporte comme un générateur de force électromotrice e et d'impédance interne $R_g$. Il délivre une tension $V_g$ et un courant d'intensité $i_A$ à l'entrée du circuit séparateur-coupleur objet de la présente invention.

Tous les phénomènes électromagnétiques mis en jeu dans le coupleur-séparateur objet de la présente invention étant réciproques, les propriétés de directivité et d'adaptation décrites relativement à l'émission s'appliquent également à la réception en tenant compte du fait que l'impédance d'entrée $z_d$ du récepteur est choisie de façon à présenter une valeur beaucoup plus importante que celle de l'émetteur, 100 ohms au lieu de 10 ohms par exemple, afin de perturber le moins possible l'impédance résultante du réseau basse tension. En effet, alors qu'à un instant donné un seul appareil émet, tous les autres sont au contraire placés en position de réception et donc quasiment en parallèle.

Le principe de superposition des états d'équilibre appliqué au circuit séparateur-coupleur objet de la présente invention, tel que représenté en figure 2, relativement au courant $i_1$ circulant dans la demi-inductance $L_{ac}$ de l'inductance principale L, $i_2$ circulant dans la demi-inductance $L_{cb}$ de l'inductance principale L, $i_3$ circulant dans le circuit de raccordement et en particulier dans l'inductance auxiliaire $L_d$, i circulant dans le réseau aval symbolisé par une résistance de charge $R_c$ en considération d'une première maille formée par le réseau amont, une impédance Z' formée par la capacité C constituant le circuit résonnant parallèle et une résistance R' d'atténuation, et le réseau aval, une deuxième maille formée par le réseau amont, la première demi-inductance $L_{ac}$ de l'inductance principale L, le circuit de liaison électrique continu et le circuit d'émission-réception E compte tenu de son impédance interne $z_d$, et enfin une troisième maille formée par le même circuit de liaison électrique continu et le circuit d'émission-réception E compte tenu de son impédance interne $z_d$, et le réseau aval symbolisé par la résistance de charge $R_c$ permet d'établir l'équation matricielle ci-après :

$$\begin{bmatrix} E \\ E \\ -e \end{bmatrix} = \begin{bmatrix} a_{11} & a_{12} & a_{13} \\ a_{21} & a_{22} & a_{23} \\ a_{31} & a_{32} & a_{33} \end{bmatrix} \cdot \begin{bmatrix} i_1 \\ i_2 \\ i \end{bmatrix}$$

Dans la relation précitée on notera les valeurs respectives :

$$a_{11} = (R_g, 0)$$

$$a_{12} = (-(R_g+x), -y)$$

$$a_{13} = (R_g+R_c+x, y)$$

$$a_{21} = (R_g, (L/4+2M+M_0)\Omega)$$

$$a_{22} = (-R_g, (L/4-2M+M_0)\Omega)$$

$$a_{23} = (R_c+R_g, 0)$$

$$a_{31} = (Z_d, (L/4+2M+L_d)\Omega - 1/C_d\Omega)$$

$$a_{32} = (x-Z_d, (M_0-L_d)\Omega + 1/C_d\Omega)$$

$$a_{33} = (-(R_c+x), -y).$$

Dans les relations précitées on notera que :

x et y désignent respectivement la partie réelle et la partie imaginaire de Z' formée par R'//C, $\Omega$ désignant la pulsation des courants porteurs.

Les relations précédentes permettent d'établir la condition pour laquelle le couplage est tel que la tension résultant en b est sensiblement annulée alors que la tension atteint un maximum au point a.

Dans un mode de réalisation pratique on notera que le circuit résonnant est un circuit à bande relativement large, ce circuit résonnant présentant un coefficient de surtension $Q \leq 5$. Ceci permet d'éviter de recourir à une valeur d'inductance prohibitive vis-à-vis des effets produits sur la tension à 50 Hz, une inductance de valeur 5 fois supérieure devant être utilisée pour obtenir la même impédance tampon dans le cas où aucun circuit résonnant ou circuit d'accord n'est utilisé. En outre, l'utilisation d'un circuit accordé à bande relativement large permet de limiter des effets inhérents à une résonance trop accentuée, de tolérer une dispersion de l'ordre de ± 30 % des caractéristiques magnétiques et électriques, en particulier des caractéristiques des noyaux magnétiques des inductances utilisées, et enfin d'accepter la transmission correcte de signaux dont le spectre est relativement large, de l'ordre de 10 kHz, lesquels possèdent de bonnes propriétés vis-à-vis des parasites très nombreux et de toute nature encombrant le réseau électrique de distribution.

Selon un mode de réalisation, l'inductance auxiliaire $L_d$ et l'inductance principale L du circuit résonnant, couplées mutuellement sont formées par un transformateur à enroulement secondaire à point milieu. Les bornes de l'enroulement secondaire sont reliées en série au réseau amont respectivement réseau aval, au niveau des points a et b et en parallèle à la capacité C formant circuit résonnant. L'une des bornes de l'enroulement primaire est connectée par une liaison électrique en continu au point milieu précité. Bien entendu, l'enroulement primaire constitue l'inductance auxiliaire $L_d$.

Une description plus détaillée d'une variante de réalisation du circuit séparateur-coupleur objet de la présente invention sera maintenant donnée en liaison avec la figure 3.

Dans le mode de réalisation précité, la capacité C constituant le circuit résonnant est isolée galvaniquement de la ligne basse tension, la capacité C étant couplée à l'enroulement secondaire du transformateur à point milieu par l'intermédiaire d'un enroulement supplémentaire formant inductance supplémentaire $L_s$. Une telle disposition permet de soustraire le condensateur C et la résistance d'amortissement R' au courant fort 50 Hz. L'enroulement supplémentaire $L_s$ peut être réalisé en fil fin par exemple.

Toujours afin d'assurer un isolement galvanique avec le réseau à basse tension, un petit transformateur à pot ou tore en ferrite peut être inséré entre le point g et le point de masse du réseau afin d'assurer la liaison avec le circuit d'émission-réception ainsi que représenté en figure 3. Avec un flux de fuite presque nul, il est ainsi possible de traduire correctement dans le secondaire les valeurs très distinctes des impédances de l'émetteur et du récepteur. Un nombre de spires limité permet de réduire encore le transfert de puissance résiduelle à 50 Hz vers le récepteur.

L'accroissement de la bande passante par l'utilisation d'une résistance d'amortissement, la résistance R', présente l'inconvénient de ne pas modifier l'allure générale de la courbe de réponse du circuit accordé, ce qui a pour effet de défavoriser relativement les composantes latérales du spectre vis-à-vis de la partie centrale de celui-ci.

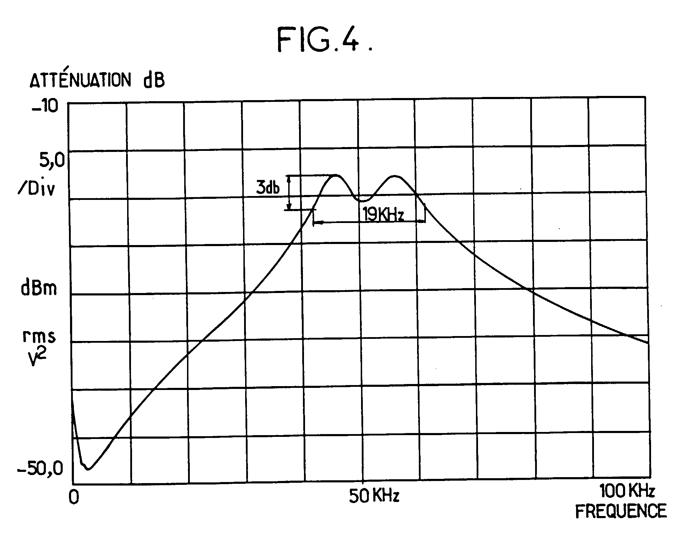

Afin de remédier à l'inconvénient précité, la courbe amplitude fréquence du circuit résonnant couplé en tension au circuit de raccordement présente deux extrema sensiblement symétriques par rapport à la fréquence centrale de la bande passante du circuit résonnant, afin de renforcer la contribution des fréquences latérales du spectre de fréquence vis-à-vis de la fréquence centrale de celui-ci. La courbe amplitude fréquence du circuit résonnant est dans ce cas représenté en figure 4. La courbe à extrema symétriques précitée est obtenue par couplage surcritique de l'inductance L, l'inductance auxiliaire $L_d$ respectivement à l'enroulement supplémentaire $L_s$. Le transformateur peut être réalisé par un transformateur à circuit magnétique à entrefer large, à pot de ferrite. La courbe précitée est obtenue en ménageant un entrefer d'épaisseur substantielle dans le circuit magnétique. Cet entrefer permet essentiellement d'exploiter le circuit au mieux des possibilités eu égard au courant à 50 Hz d'intensité > 95 ampères tendant à le saturer. Dans ces conditions, le flux de fuite interne au pot de ferrite par exemple est alors mis à profit pour découpler partiellement deux circuits accordés, ainsi que représenté en figure 5a, chaque circuit étant accordé sur un demi-circuit magnétique. Le complément de découplage est alors assuré par une connexion électrique précisément ajustée entre les deux circuits résonnants, tels que représentés sur la figure 5a précitée. Le circuit résonnant est alors subdivisé en un premier et un deuxième circuit résonnant élémentaire L1, C1 L2, C2. Chacun est accordé sur une fréquence fl respectivement f2, avec f1 < f2, les fréquences f1, f2 ayant respectivement sensiblement la valeur correspondante des deux extrema symétriques. Le deuxième circuit résonnant élémentaire est en outre amorti par une résistance de valeur R2 et les bornes du premier et deuxième circuit résonnant élémentaire sont reliées par une capacité de liaison C3, les bornes aval du premier et du deuxième circuit résonnant élémentaire étant reliées par une liaison continue.

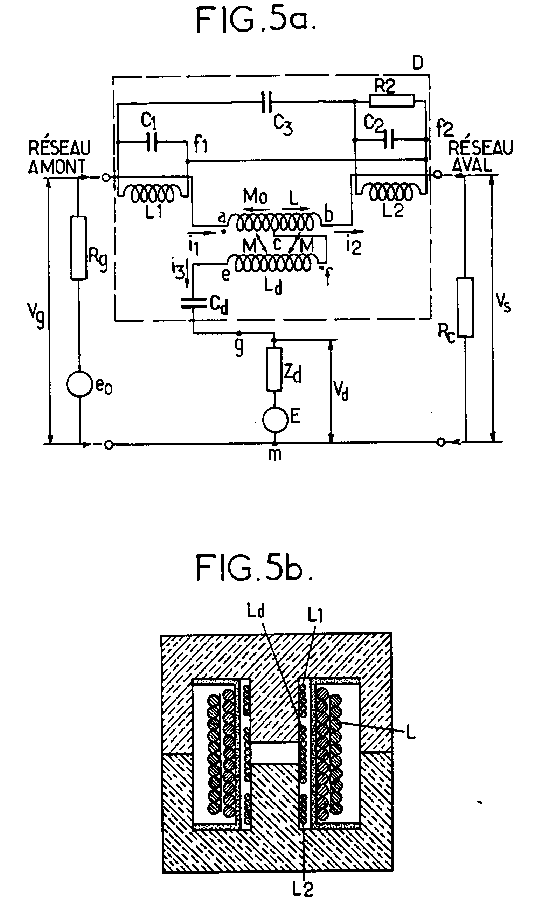

Ainsi qu'on l'a en outre représenté en figure 5b, le pot en ferrite comporte avantageusement deux demi-coquilles en forme de E formant un entrefer large au niveau de la zone centrale formée par les deux demi-coquilles assemblées. Le logement périphérique à la zone centrale ainsi formé comporte successivement, à partir de l'axe central de la zone centrale, les enroulements L1, L2 des premier et deuxième circuits résonnants élémentaires disposés symétriquement par rapport à l'entrefer. L'enroulement de l'inductance auxiliaire Ld est intercalé entre les enroulements des premier et deuxième circuits résonnants élémentaires. L'enroulement de l'inductance L du circuit résonnant ou inductance principale vient ensuite sur les enroulements L1, L2 et Ld.

On a ainsi décrit un dispositif séparateur-coupleur directif particulièrement performant dans la mesure où celui-ci permet d'assurer un découplage maximum entre le réseau aval et l'émetteur-récepteur à courant porteur alors que, au contraire, il permet d'assurer un couplage maximum de ce même émetteur-récepteur vers le réseau amont par exemple. Un simple changement de sens d'enroulement d'une bobine sur le circuit magnétique du séparateur-coupleur directif objet de la présente invention précédemment décrit permet d'inverser le sens de la directivité. Au demeurant il est également possible de disposer deux circuits magnétiques complémentés, l'un couplant vers le réseau amont l'autre vers le réseau aval, chacun aboutissant vers un émetteur-récepteur qui lui est propre, sans sortir du cadre de l'objet de la présente invention.

**Revendications**

1. Circuit séparateur-coupleur directif pour courants porteurs à fréquence moyenne sur une ligne électrique du réseau alternatif basse tension, comprenant un circuit résonnant parallèle inséré sur la ligne électrique, dont la fréquence de résonance est voisine de la fréquence centrale de la bande passante des courants porteurs à fréquence moyenne, et un circuit d'émission-réception (E) desdits courants porteurs couplé en tension audit circuit résonnant par un circuit de raccordement, caractérisé en ce que ledit circuit de raccordement comprend également une branche de raccordement série (Ld, Cd) permettant d'assurer un couplage en courant du circuit d'émission-réception (E) et de la ligne à la fréquence moyenne et un découplage dudit circuit d'émission-réception (E) de la ligne à la fréquence du réseau basse tension.

2. Circuit selon la revendications 1, caractérisé en ce que ledit circuit résonnant comportant une capacité (C) en parallèle sur une inductance (L), ledit circuit de raccordement est formé par :

   - une inductance auxiliaire (Ld) couplée par inductance mutuelle avec ladite inductance (L) du circuit résonnant parallèle, ladite inductance auxiliaire (Ld) assurant le couplage en tension du circuit émetteur audit circuit résonnant,
   - une capacité auxiliaire (Cd) assurant la liaison entre une première extrémité de ladite inductance auxiliaire et ledit circuit d'émission-réception;
   - un circuit de liaison électrique continue entre l'autre extrémité de ladite inductance auxiliaire et le point milieu de ladite inductance (L) du circuit résonnant parallèle, ledit circuit de liaison électrique continue, ladite inductance auxiliaire (Ld) et ladite capacité auxiliaire (Cd) constituant la branche de raccordement série du circuit d'émission-réception à la ligne.

3. Circuit selon revendication 2 , caractérisé en ce que ladite inductance auxiliaire (Ld) et ladite inductance (L) du circuit résonnant, couplées mutuellement, sont formées par un transformateur à enroulement secondaire à point milieu, les bornes dudit enroulement secondaire étant reliées en série à la ligne et en parallèle à ladite capacité (C) formant circuit résonnant, l'une des bornes de l'enroulement primaire étant connectée par une liaison électrique en continu audit point milieu.

4. Circuit selon la revendication 3, caractérisé en ce que ladite capacité (C) constituant ledit circuit résonnant est isolée galvaniquement de la ligne basse tension, ladite capacité (C) étant couplée audit enroulement secondaire dudit transformateur à point milieu par l'intermédiaire d'un enroulement supplémentaire.

5. Circuit selon l'une des revendications 1 à 4, caractérisé en ce que la courbe amplitude-fréquence du circuit résonnant, couplé en tension audit circuit de raccordement, présente deux extrema, sensiblement symétriques par rapport à la fréquence centrale de la bande passante dudit circuit résonnant, afin de renforcer la contribution 5des fréquences latérales du spectre de fréquence vis-à-vis de la fréquence centrale de celui-ci.

6. Circuit selon les revendications 3 et 5, caractérisé en ce que ladite courbe à extrema symétriques est obtenue par couplage surcritique de l'inductance, l'inductance auxiliaire, respectivement l'enroulement supplémentaire, ledit transformateur étant un transformateur à circuit magnétique à entrefer large à pot de ferrite.

7. Circuit selon la revendication 6, caractérisé en ce que ledit circuit résonnant est subdivisé en un premier et un deuxième circuit résonnant élémentaire (L1, C1) ; (L2, C2), chacun accordé sur une fréquence f1, respectivement f2, avec f1 < f2, les fréquences fl, f2 ayant respectivement sensiblement la valeur correspondante des deux extrema symétriques, le deuxième circuit résonnant élémentaire étant, en outre, amorti par une résistance de valeur R2, les bornes amont du premier et du deuxième circuit résonnant élémentaire étant reliées par une capacité de liaison (C3) et les bornes aval du premier et du deuxième circuit résonnant élémentaire étant reliées par une liaison continue.

8. Circuit selon les revendications 6 et 7, caractérisé en ce que ledit pot en ferrite comporte : deux demi-coquilles en E formant un entrefer large au niveau de la zone centrale formée par les deux demi-coquilles assemblées, le logement périphérique à la zone centrale ainsi formée comportant successivement à partir de l'axe central de ladite zone centrale :

- les enroulements (L1, L2), desdits premier et deuxième circuit résonnant élémentaire, disposés symétriquement par rapport à l'entrefer, l'enroulement de l'inductance auxiliaire (Ld) étant intercalé entre lesdits enroulements desdits premier et deuxième circuit résonnant élémentaire,
- l'enroulement de l'inductance (L) du circuit résonnant.

9. Circuit selon l'une des revendications précédentes, caractérisé en ce que ledit circuit résonnant présente un coefficient de surtension Q ≤ 5.

**Patentansprüche**

1. Richtkoppler-/Verzweigerschaltung für Mittelfrequenz-Trägerstrom auf einer elektrischen Niederspannungsnetzleitung, umfassend einen Parallel-Resonanzstromkreis, der in die elektrische Leitung geschaltet ist, dessen Resonanzfrequenz benachbart zu der Mittenfrequenz des Durchlaßbands des Mittenfrequenz-Trägerstroms benachbart ist, und einen Sende-Empfangsstromkreis (E) des Trägerstroms, die mit dem Resonanzstromkreis durch einen Verbindungsstromkreis spannungsgekoppelt ist, dadurch gekennzeichnet, daß der Verbindungsstromkreis außerdem einen Serienverbindungszweig (Ld, Cd) aufweist, der die Sicherstellung einer Stromkopplung des Sende-Empfangsstromkreises (E) und der Mittenfrequenzleitung und eine Entkopplung des Sende-Empfangsstromkreises (E) der Niederspannungsleitung gewährleisten kann.

2. Schaltung nach Anspruch 1, dadurch gekennzeichnet, daß der Resonanzstromkreis eine Kapazität (C) parallel zu einer Induktanz (L) umfaßt, wobei der Verbindungsstromkreis gebildet ist durch:

   - eine Hilfsinduktanz (Ld), die durch gegenseitige Induktanz mit der Induktanz (L) des Parallel-Resonanzstromkreises gekoppelt ist, wobei die Hilfsinduktanz (Ld) die Spannungskopplung des Sendestromkreises mit dem Resonanzstromkreis gewährleistet,
   - eine Hilfskapazität (Cd), welche die Verbindung zwischen einem ersten Ende der Hilfsinduktanz und dem Sendeempfangsstromkreis gewährleistet,
   - einen Stromkreis zur kontinuierlichen elektrischen Verbindung zwischen dem einen Ende der Hilfsinduktanz und der Mittenanzapfung der Induktanz (L) des ParallelResonanzstromkreises, wobei der elektrische kontinuierliche Verbindungsstromkreis, die Hilfsinduktanz (Ld) und die Hilfskapazität (Cd) einen Serienverbindungszweig der Sende-Empfangsschaltung für die Leitung bildet.

3. Schaltung nach Anspruch 2, dadurch gekennzeichnet, daß die Hilfsinduktanz (Ld) und die Induktanz (L) des Resonanzstromkreises, die gegenseitig gekoppelt sind, durch einen Transformator mit Sekundärwicklung mit Mittenanzapfung gebildet sind, wobei die Anschlüsse der Sekundärwicklung mit der Leitung in Reihe und mit der den Resonanzsstromkreis bildenden Kapazität (C) parallel geschaltet sind, wobei einer der Anschlüsse der Primärwicklung über eine kontinuierliche elektrische Verbindung an die Mittenanzapfung angeschlossen ist.

4. Schaltung nach Anspruch 3, dadurch gekennzeichnet, daß die den Resonanzstromkreis bildende Kapazität (C) galvanisch von der Niederspannungsleitung isoliert ist, wobei die Kapazität (C) mit der Sekundärwicklung des Transformators an der Mittenanzapfung unter Zwischenschaltung einer Zusatzwicklung verbunden ist.

5. Schaltung nach einem der Ansprüche 1 bis 4, dadurch gekennzeichnet, daß die Amplituden-Frequenzkennlinie des Resonanzstromkreises, der mit dem Verbindungsstromkreis spannungsgekoppelt ist, zwei Extremwerte im wesentlichen symmetrisch in Bezug auf die Mittenfrequenz des Durchlaßbandes des Resonanzstromkreises aufweist, um den Beitrag der Nebenfrequenzen des Frequenzspektrums zu dessen Mittenfrequenz zu verstärken.

6. Schaltung nach Anspruch 3 und 5, dadurch gekennzeichnet, daß die Kennkurve mit symmetrischen Extremwerten durch eine überkritische Kopplung der Induktanz, der Hilfsinduktanz bzw. der Zusatzwicklung erhalten wird, wobei der Transformator ein Magnetkreis mit großem Luftspalt und Ferritkern ist.

7. Schaltung nach Anspruch 6, dadurch gekennzeichnet, daß der Resonanzstromkreis in erste und zweite Elementar-Resonanzstromkreise (L1, C1) (L2, C2) unterteilt ist, von denen jeder auf eine Frequenz f1 bzw. f2 abgestimmt ist, wobei f1 < f2, wobei die Frequenzen f1, f2 jeweils im wesentlichen dem entsprechenden Wert der beiden symmetrischen Extremwerte entsprechen, wobei der zweite Elementar-Resonanzstromkreis außerdem durch einen Widerstand mit einem Wert R2 gedämpft ist, wobei die Anschlüsse stromauf vom ersten und vom zweiten Elementar-Resonanzstromkreis durch eine Verbindungskapazität (C3) verbunden sind, und wobei die stromabwärtigen Anschlüsse der ersten und zweiten Elementar-Resonanzstromkreise durch eine kontinuierliche Verbindung verbunden sind.

8. Schaltung nach Anspruch 6 oder 7, dadurch gekennzeichnet, daß der Ferritkern umfaßt: zwei E-Halbschalen, die einen großen Luftspalt auf der Höhe der zentralen Zone bilden, welche durch die beiden Halbschalenanordnungen gebildet ist, wobei der Umfangssitz der derart gebildeten zentralen Zone ausgehend von der Mittenachse der zentralen Zone aufeinanderfolgend umfaßt:

- die Wicklungen (L1, L2) der ersten und zweiten Elementar-Resonanzstromkreise, die symmetrisch in Bezug auf den Luftspalt angeordnet sind, wobei die Wicklung der Hilfsinduktanz (Ld) zwischen die Wicklungen der ersten und zweiten Elementar-Resonanzstromkreise geschaltet ist,
- die Wicklung der Induktanz (L) des Resonanzstromkreises.

9. Schaltung nach einem der vorangehenden Ansprüche, dadurch gekennzeichnet, daß der Resonanzstromkreis ein Überspannungsverhältnis $Q \leq 5$ hat.

**Claims**

1. Directional separator-coupler circuit for medium-frequency carrier currents on an electrical line of the low-voltage alternating network, comprising a parallel resonant circuit inserted into the electrical line, whose resonance frequency is close to the central frequency of the pass band of the medium-frequency carrier currents, and a circuit for transmission-reception (E) of said carrier currents voltage-coupled to said resonant circuit by a connecting circuit, characterized in that said connecting circuit also comprises a series connecting branch ($L_d$, $C_d$) making it possible to provide a current coupling for the transmission-reception circuit (E) and for the medium-frequency line and a decoupling of said transmission-reception circuit (E) from the line at the frequency of the low-voltage network.

2. Circuit according to claim 1, characterized in that said resonant circuit including a capacitor (C) in parallel with an inductor (L), said connecting circuit is formed by:

- an auxiliary inductor ($L_d$) coupled by mutual inductance with said inductor (L) of the parallel resonant circuit, said auxiliary inductor ($L_d$) providing the voltage coupling of the transmitter circuit to said resonant circuit,
- an auxiliary capacitor ($C_d$) providing the link between a first end of said auxiliary inductor and said transmission-reception circuit;
- a direct-current electrical link circuit between the other end of said auxiliary inductor and the mid-point of said inductor (L) of the parallel resonant circuit, said direct-current electrical link circuit, said auxiliary inductor ($L_d$) and said auxiliary capacitor ($C_d$) constituting the branch for series connection of the transmission-reception circuit to the line.

3. Circuit according to claim 2, characterized in that said auxiliary inductor ($L_d$) and said inductor (L) of the resonant circuit, mutually coupled, are formed by a transformer with a center-tapped secondary winding, the terminals of said secondary winding being linked in series to the line and in parallel to said capacitor (C) forming a resonant circuit, one of the terminals of the primary winding being connected by a direct-current electrical link to said mid-point.

4. Circuit according to claim 3, characterized in that said capacitor (C) constituting said resonant circuit is galvanically isolated from the low-voltage line, said capacitor (C) being coupled to said secondary winding of said center-tapped transformer by means of an additional winding.

5. Circuit according to one of claims 1 to 4, characterized in that the amplitude-frequency curve of the resonant circuit, voltage-coupled to said connecting circuit, exhibits two extrema, substantially symmetric with respect to the central frequency of the pass band of said resonant circuit, so as to reinforce the contribution of the lateral frequencies of the frequency spectrum with respect to the central frequency of the latter.

6. Circuit according to claims 3 and 5, characterized in that said curve with symmetric extrema is obtained by supercritical coupling of the inductor, the auxiliary inductor, the additional winding respectively, said transformer being a transformer with a magnetic circuit with a wide gap and with a ferrite pot.

**7.** Circuit according to claim 6, characterized in that said resonant circuit is subdivided into a first and a second elementary resonant circuit ($L_1$, $C_1$); ($L_2$, $C_2$), each tuned to a frequency $f_1$, $f_2$ respectively, with $f_1 < f_2$, the frequencies $f_1$, $f_2$ respectively having substantially the value corresponding to the two symmetric extrema, the second elementary resonant circuit furthermore being damped by a resistor of value $R_2$, the upstream terminals of the first and of the second elementary resonant circuit being linked by a link capacitor ($C_3$) and the downstream terminals of the first and of the second elementary resonant circuit being linked by a direct-current link.

**8.** Circuit according to claims 6 and 7, characterized in that said ferrite pot includes: two E-shaped half-shells forming a wide gap in the region of the central area formed by the two assembled half-shells, the housing peripheral to the central area thus formed successively including, from the central axis of said central area:

- the windings ($L_1$, $L_2$) of said first and second elementary resonant circuit, arranged symmetrically with respect to the gap, the winding of the auxiliary inductor ($L_d$) being interposed between said windings of said first and second elementary resonant circuit,
- the winding of the inductor (L) of the resonant circuit.

**9.** Circuit according to one of the preceding claims, characterized in that said resonant circuit exhibits a Q coefficient $\leq 5$.

FIG.1a. (ART ANTERIEUR)

FIG.1b. (ART ANTERIEUR)

FIG.2.

FIG.3.

# FIG.4.

## FIG.5a.

## FIG.5b.